# EUROPEAN PATENT SPECIFICATION

(11) **EP 2 787 205 B1**
(45) Date of publication and mention of the grant of the patent: **26.07.2017**
(21) Application number: 13162121.1
(22) Date of filing: 03.04.2013
(51) Int. Cl.: F02D 41/22, F02D 41/24, F02D 33/02, F02D 41/14, F02D 41/18

(54) **System for estimating a vehicle fuel consumption**
System zur Schätzung des Kraftstoffverbrauchs eines Fahrzeugs
Système permettant d'estimer la consommation de carburant d'un véhicule

(43) Date of publication of application: 08.10.2014
(73) Proprietor: IVECO S.p.A., 10156 Torino (IT)
(72) Inventor: Pirillo, Luigi, 10045 Piossasco (IT)
(74) Representative: Franzolin, Luigi

(56) References cited:
- EP-A2- 1 854 986
- WO-A2-03/077205
- US-A- 4 437 342
- US-A1- 2003 004 624

## Description

### Application field of the invention

The present invention refers to the field of vehicle diagnostic systems, in particular for estimating a vehicle fuel consumption.

### Description of the prior art

The estimation of fuel consumption is, by now, a particularly relevant aspect, for any type of vehicle and especially for industrial vehicles, which cover millions of kilometers. An example is given by the prior art document EP-1 854 986 Currently, the fuel consumption is estimated on the basis of the quantity of fuel injected by the injectors. Thus, injector manufacturers try to model the injectors in the best possible way and to implement estimation models in the vehicle control units. Injector models, however, are not particularly precise, in addition the construction characteristics of injectors belonging to different lots can change remarkably, making the fuel consumption estimations even less precise.

Moreover, in some operating conditions, some algorithms for estimating the fuel consumption may differ sensibly from the real consumption, generating confusion and false expectations in the vehicle user, and, in some cases, even the belief that the vehicle has a technical problem.

### Summary of the invention

Therefore the aim of the present invention is to overcome all the aforementioned drawbacks and to provide a system for analysing a vehicle fuel consumption.

According to a preferred alternative embodiment of the invention, such system for analysing the fuel consumption is of the "off-line" type, namely it allows to analyse the vehicle fuel consumption while the vehicle is in a garage, generally when performing its periodic servicing.

According to another alternative embodiment, the fuel consumption is monitored "on-line", namely by means of the on-board instruments themselves.

The idea at the basis of the present invention is to homogenize the usage of vehicles having at least the same engine, in order to make a far more realistic and reliable estimation of the fuel consumption than the estimations made in the prior art, provided that the vehicle has no faults.
Such standardization is obtained by a division of the value scales of some average operating parameters into intervals and/or areas of relations between average operating parameters, which identify a usage/functioning of the engine/vehicle and then by assigning a score (increasing or decreasing) to such intervals or areas of relations according to a distance from an interval and/or area identifying an ideal operating condition of the engine or of the vehicle in general.
Thus the operating conditions of the engine/vehicle are discretized.
Now the vehicles, and thus the respective operating parameters, are grouped by the total score obtained and, for each group, an average value of the average consumption is calculated, regardless of how such score is obtained. The average fuel consumption is calculated by an engine control unit as the ratio between the number of litres of fuel were loaded on the vehicle and the number of hundreds of km were covered overall by the vehicle. Such value is clearly objective and does not depend on particular mathematical models.
Once a predefined vehicle population has been sampled and an average value of their average consumption has been calculated for each vehicle group, a comparison of the average consumption of a further vehicle, equipped with at least the same type of engine, with a corresponding - according to the respective score - average value of average fuel consumption, allows to immediately identify a fault of such further vehicle.

The system of analysis described above allows, on the one hand, to evaluate how reasonable is the fuel consumption in relation to the specific usage of the vehicle and, on the other hand, to indicate possible causes of an excessive fuel consumption.

The object of the present invention is a method for estimating a vehicle fuel consumption, in accordance with claim 1.

Such fuel consumption estimation is then necessary to diagnose a fault of the vehicle, in accordance with claim 11.
The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:

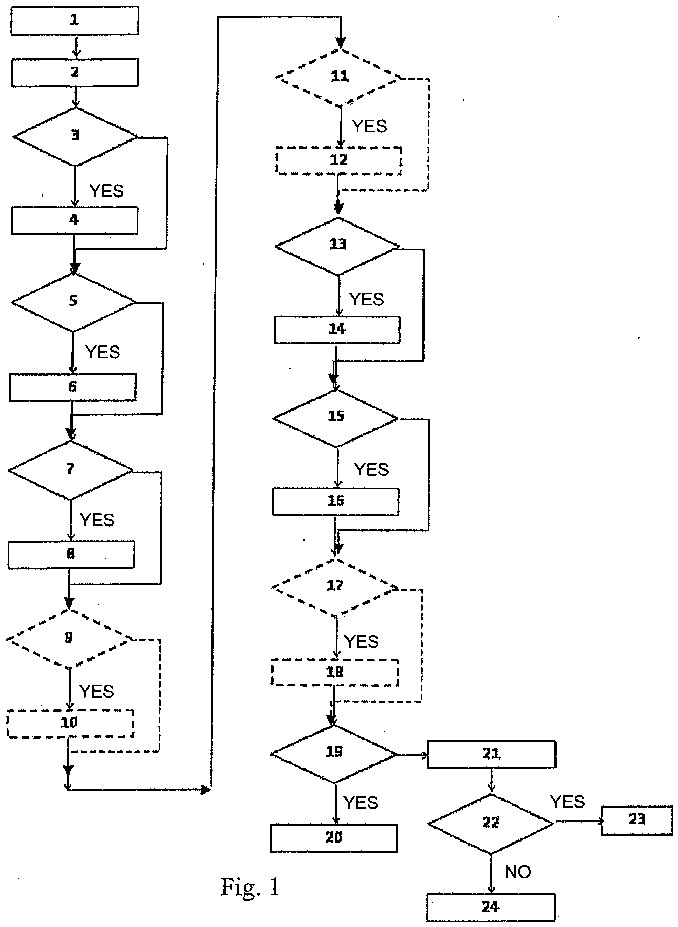

figure 1 shows an example of block diagram showing, also by means of optional and dashed blocks, preferred embodiments of the method implemented by the system of the present invention.
In the figures the same reference numbers and letters identify the same elements or components.

### Detailed description of preferred embodiments of the invention

The present invention exploits the data stored in the vehicle control units of most of the vehicles.

The following parameters are usually stored in engine control units:
- vehicle identification number
- type of the engine
- total number of km covered by the vehicle
- average fuel consumption calculated on the basis of the litres of fuel loaded and measured by the level sensor, calculated as a ratio between the total number of litres of fuel loaded on the vehicle and the total number of km covered by the vehicle,
- average rpm of the engine
- average vehicle speed
- average driving cycle, namely the number of minutes between an engine start and its subsequent stop,
- possible presence of one or more aerodynamic add-ons.

Such data have always been considered as not sufficient to evaluate the vehicle efficiency.

On the contrary, according to the present invention, such data are processed in order to obtain specific indicators of vehicle efficiency.

According to a first preferred alternative embodiment of the invention, the whole interval of engine rpm is divided into sub-intervals R1, R2, R3, etc. and a score 0,1,2,3 etc. is assigned to each one of said sub-intervals.

| | |
|---|---|
| Int. R6 | 2 |
| Int. R5 | 1 |
| Int. R4 | 0 |
| Int. R3 | 0 |
| Int. R2 | 1 |
| Int. R1 | 2 |
| % - RPM | 0 - 100 |

In the table, Int. R1, Int. R2, etc. identify specific intervals, while the right column contains the respective scores: 0, 1, 2. It is evident that different intervals can have the same score, for example R1 and R6.

Similarly, the whole interval of vehicle speed is divided into sub-intervals S1, S2, S3, etc. and a score 0,1,2,3, etc. is assigned to each one of them.

| | |
|---|---|
| Int. S6 | 2 |
| Int. S5 | 1 |
| Int. S4 | 0 |
| Int. S3 | 0 |
| Int. S2 | 1 |
| Int. S1 | 2 |
| Km/h | 0 - 100 |

The lowest score indicates, for example, an ideal use of the engine and of the vehicle, namely with a higher fuel saving.

For example, in an engine whose displacement is comprised between 2500 cc and 3000 cc, score 0 is assigned when its average rpm falls within an interval of rpm wherein the engine is more efficient, for example between 1800 and 3000 rpm, while the value of the score increases as far as the distance of such average value from such ideal operating conditions increases.

The same is done also for vehicle speed.

For the same engine, the same thing happens when the vehicle speed falls outside a speed interval of about 50 - 100 km/h (S3 and S4).

For a specific vehicle, the score obtained in relation to the average rpm and to the average vehicle speed are summed to each other.

By performing such operation for a population of sample vehicles of about some tens of vehicles having the same engine type, groups of vehicles characterized by the same total score can be obtained.

Advantageously, this allows to homogenize populations of vehicles that have equivalent, although different, usage.

For each one of such groups, an average of the average fuel consumption is calculated, in the following indicated with "average of the average fuel consumption" or ECE, obtaining as many values as the groups identified.

Such calculations can be performed by a remote server which acquires the operating parameters of the engine control units of the population of vehicles.

The number of groups is given by the number of possible score values that can be obtained. In the example shown above, the groups that can be obtained are five, with scores between 0 and 4, respectively.

After a number of tests, it has been possible to verify that downstream of the aforementioned calculations, considering a further vehicle, once the respective scores have been given to the average engine rpm and to the average vehicle speed of the further vehicle, a total score is obtained. For such total score, an ECE value, previously associated to such total score, is identified, as shown above, and such specific ECE value is compared with the average fuel consumption calculated by and stored in the engine control unit of the further vehicle itself. If there is a deviation exceeding a predetermined threshold, it clearly identifies a mechanical problem of the engine or a wrong matching of the vehicle gear ratio with the mission of the vehicle itself.

An off-line analysis can be performed in the garage, during the periodic servicing of the vehicle. An on-line analysis can be performed by the on-board instruments themselves wherein said pairs of score/ECE values have been previously loaded. Such calculations can be performed for example by the engine control unit itself, or by further processing means connected with the engine control unit, for example by the on-board data network.

Since the engine control unit stores the number of all the kilometers covered by the vehicle, the average engine rpm, the average speed and the average fuel consumption over the whole distance covered, it can be useful to perform the aforementioned analysis over a specific time interval, in order to identify some drifts in a "differential" way. According to another preferred alternative embodiment of the invention, the engine control unit can store partial values of the aforementioned parameters, in appropriate memory allocations:
- distance covered
- average fuel consumption calculated on the basis of the number of litres of fuel loaded and measured by the sensor level and the distance covered,
- average rpm of the engine, for the sake of brevity RPM
- average vehicle speed, for the sake of brevity S
- average driving cycle, for the sake of brevity D, namely the number of minutes between an engine start and its subsequent stop,

Namely values that can be calculated over predetermined time or distance or fuel consumption intervals, and after that be deleted or overwritten.

According to another preferred alternative embodiment of the invention, when in the engine control unit both the engine rpm R11 - R14 and the torque delivered T1 - T6 are stored, according to intervals that are related to each other, it is possible to identify areas or regions A1 - G1, rather than value intervals, as shown in the following table:

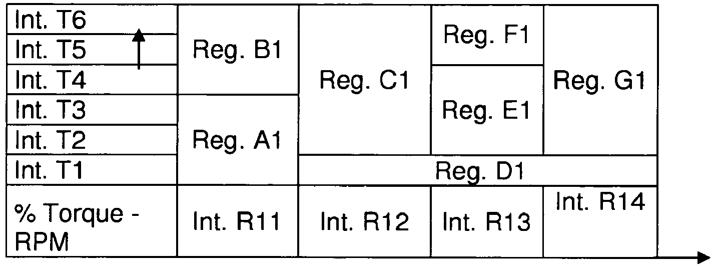

In general, the regions or areas identified by a low value of torque delivered (T1, T2), namely A1 and D1, identify a low fuel consumption. In addition the area C1 is the one that by far identifies the ideal engine operating conditions.

The areas with the worst fuel consumption are B1, F1 and G1 wherein a high torque is required in extreme operating conditions of the thermal engine.

A possible score attribution can be, for example, the following:

| | |
|---|---|
| Int. A1 | 1 |
| Int. B1 | 3 |
| Int. C1 | 0 |
| Int. D1 | 1 |
| Int. E1 | 2 |
| Int. F1 | 3 |
| Int. G1 | 3 |

According to another preferred embodiment of the invention, intervals of vehicle speed are in relation with intervals of torque delivered by the engine. Also in this case, it is possible to identify areas or regions A - F to which a score is assigned.

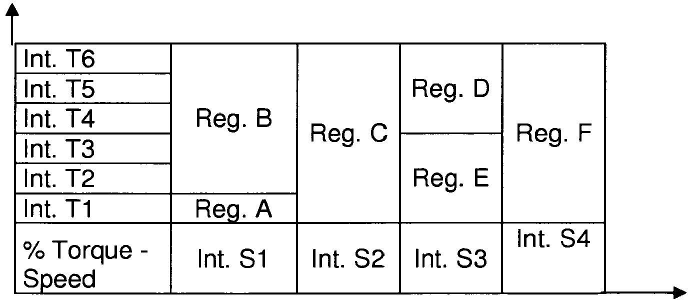

The area A identifies an idle operating condition of the engine, namely with a vehicle speed near zero and with a very low torque delivered.

The area B identifies a vehicle speed near zero but with a high torque delivered. This indicates, unambiguously the use of a power takeoff.

The area C indicates a non optimal fuel consumption, while the areas E and D indicate an optimal vehicle speed in conditions of low load or of high load, respectively. In general, the area E represents the one with the lowest fuel consumption. In relation to the precision that is required to the present system, areas E and D can be given the same score or different scores, especially a higher (worse) score to the area D.

The area F can be assimilated, in terms of score, to the area B.

A possible score attribution can be, for example, the following:

| | |
|---|---|
| Int. A | 3 |
| Int. B | 4 |
| Int. C | 2 |
| Int. D | 1 |
| Int. E | 0 |
| Int. F | 4 |

For more convenience, the intervals T1 - T6, R1 - R6, S1 - S6 are discretized, so that they are numbered with increasing values. At the same time, it has to be noted that the tables identifying the aforementioned areas, are made in a Cartesian plane and are coherently made discrete according to the engine or the vehicle fuel consumption. Another aspect that can give a contribution to the score attribution is the average driving cycle. In particular, continuous intervals of time are given an increasingly lower (better) score as the average driving cycle increases.

According to a further preferred alternative embodiment of the system, the engine control unit is suitable to store a percentage of operating time of the engine/vehicle in each one of said areas/regions.

Such alternative embodiment allows to give a score from better to worse (0 - N) in relation to not only the area within which the vehicle/engine has operated, but also in relation to the time percentage in which it has operated in such area.

For example, if the vehicle has operated in the area C1 for a time longer than 30%, then a score 0 is given, and the score increases as such percentage decreases.

On the contrary, in relation to the area G1, the score increases as the time percentage wherein the vehicle operates in the area G1 increases.

The flowchart shown in figure 1 is based on the possibility of storing in the engine control unit the time percentage wherein the engine/vehicle has operated within a interval or area.

A further score can be given to the ratio between average vehicle speed and average engine rpm. If such ratio falls within a predetermined interval, than the score is for example 0; otherwise the score is increased as the distance of such ratio from such predetermined interval increases in absolute terms. Thus such predetermined interval identifies an ideal operating condition, namely with the lowest fuel consumption, of the engine/vehicle.

Another aspect that can determine a further score attribution is the presence of aerodynamic add-ons.

In general, any vehicle feature that may affect the fuel consumption of the vehicle itself can be considered by the scoring.

For the validation of the present system, 30 vehicles without any fault and provided with the same engine were sampled. Then the aforementioned ECE values were calculated.

After that, a further vehicle equipped with the same engine type and without any fault was considered, and the average fuel consumption (litres/100km) calculated by the engine control unit of such further vehicle proved to be equal to the corresponding ECE within a margin lower than 10%.

Such result is really surprising, considering that the on-board computer was able to perform a fuel consumption estimation according to the prior art that was precise within a margin of 25%.

A preferred alternative embodiment of the method is described hereinafter with particular reference to figure 1:
- (step 1) START
- (step 2) score = 0
- (step 3) check: is the operating percentage (%) of the vehicle in an ideal consumption area (C1 in RPM/Torque) lower than a first threshold (Th1)?
- (step 4) if yes (step 3 = YES) the score is increased of one point, otherwise
- (step 5) check: is the operating percentage of the vehicle in a high consumption area (B1, F1 e G1 in RPM/Torque) higher than a second threshold (Th2)?
- (step 6) if yes (step 5 = YES) the score is increased of one point, otherwise go direct to
- (step 7) is the operating percentage of the vehicle with an ideal speed (S3, S4) lower than a third threshold (Th3)?
- (step 8) if yes (step 7 = YES) the score is increased of one point, otherwise go direct to
- (step 9) is the operating percentage of the vehicle with engine in idle and active power takeoff (area B in RPM/Torque) higher than a fourth threshold (Th4)?
- (step 10) if yes (step 9 = YES) the score is increased of one point, otherwise go direct to
- (step 11) is the operating percentage of the vehicle with speed and torque out of ideal conditions (C, F in Speed/Torque) higher than a fifth threshold (Th5)?
- (step 12) if yes (step 11 = YES) the score is increased of one point, otherwise go direct to
- (step 13) is the average speed below a sixth threshold (Th6) ?
- (step 14) if yes (step 13 = YES) the score is increased of one point, otherwise go direct to
- (step 15) is the average engine rpm out of said ideal interval (S3, S4)?
- (step 16) if yes (step 15 = YES) the score is increased of one point, otherwise go direct to
- (step 17) is the average driving cycle (D) lower than a seventh threshold Th7?
- (step 18) if yes (step 17 = YES) the score is increased of one point, otherwise go direct to
- (step 19) is the score = 0?
- (step 20) if yes (step 19 = YES) send the message "the vehicle fuel consumption is correct";
- (step 21) otherwise compare the average consumption with a corresponding average value of average fuel consumptions (ECE) relating to a group identified by the score obtained,
- (step 22) if a percentage difference is lower than a eighth threshold (Th8), then
- (step 23) if yes (step 23 = YES) send the message "the fuel consumption is correct, the use of the vehicle can be improved";
- (step 24) otherwise send the message "fuel consumption not correct"

From the flowchart shown with the help of figure 1, it can be understood that both the values of the operating parameters, such as average speed, average driving cycle, average engine rpm, and the time percentage wherein such conditions occurred can be used. Such time percentage corresponds, in other words, to the frequency of use of the vehicle in such determined conditions.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the claims.

## Claims

1. Method for estimating a vehicle fuel consumption, comprising the following subsequent steps:
- (i) attribution of a first score to at least a first operating parameter (S, RPM, T, D) of the vehicle and/or of a respective internal combustion engine,
- (ii) attribution of a further score to at least a further distinct operating parameter (S, RPM, T, D) of the vehicle and/or of a respective internal combustion engine,
- sum of the first score with the further score in order to obtain a total score,
- calculation of an average of average fuel consumptions (ECE) over a group of vehicles having the same total score.

2. Method according to the previous claim, wherein an average fuel consumption is calculated as a ratio between total number of litres of fuel loaded on the vehicle and a respective distance covered by the vehicle.

3. Method according to one of the previous claims, further comprising a preliminary step of storing said overall distance covered by the vehicle, and of storing said operating parameters and wherein said operating parameters are distinct between each other and are chosen among:
- average rpm of the engine (RPM),
- average torque delivered (T),
- average vehicle speed (S),
- average driving cycle (D).

4. Method according to one of the preceding claims, wherein said score attribution is operated as a function of the numerical value of each one of said operating parameters.

5. Method according to claim 4, wherein said score attribution is operated by a discretization of each value scale corresponding to one of said parameters (S1 - S6, R1 - R6, T1 - T6) and by a previous attribution of an increasing or decreasing score at increasingly distant values from a reference interval corresponding to an ideal operating condition of the engine/vehicle.

6. Method according to claim 1, further comprising the following preliminary steps:
- storing of said distance covered by the vehicle,
- discretization of each value scale corresponding to one of said operating parameters in intervals contiguous to each other,
- calculation and storing of a time percentage value associated to each one of said discrete intervals, wherein said operating parameters remained in such each interval, according to the operation of the vehicle/engine,
and wherein said score attributions are operated as a function of a percentage value associated to one of said intervals.

7. Method according to claim 6, wherein said operating parameters are distinct between each other and are chosen among:
- average rpm of the engine,
- average torque delivered,
- average vehicle speed,
- average driving cycle.

8. Method according to the previous claims, wherein at least on of said operating parameters is a function of torques of further operating parameters distinct between each other ((T,S), (T, RPM)) and wherein said subdivision in continuous intervals identifies 2D areas (A1 - G1, A - F).

9. Method according to one of the previous claims, wherein a further score is assigned in relation to the presence/absence of an aerodynamic add-on.

10. Method according to one of the preceding claims, wherein said distance covered, said litres of fuel loaded, said average engine rpm, said average torque delivered, said average vehicle speed, said average driving cycle are values calculated over a whole life of the vehicle or over a partial distance covered by the vehicle.

11. Method for diagnosing a fault of a ground vehicle, comprising a step of storing said averages of average consumptions (ECE) of each group of vehicles according to one of the preceding claims 1 - 10, of calculating a total score of said ground vehicle according to one of the preceding claims 1 - 10 and of comparing a corresponding average value of average consumptions (ECE), identified according to said total score, with an average fuel consumption calculated according to claim 2: if said comparison shows a difference exceeding a predetermined threshold, a message indicating a possible mechanical problem of said ground vehicle is sent.

12. Diagnostic method according to claim 11, comprising the following subsequent steps:
- (step 1) START
- (step 2) score = 0
- (step 3) check: is the operating percentage (%) of the vehicle in an ideal consumption area (C1 in RPM/Torque) lower than a first threshold (Th1)?
- (step 4) if yes (step 3 = YES) the score is increased of one point, otherwise
- (step 5) check: is the operating percentage of the vehicle in a high consumption area (B1, F1 e G1 in RPM/Torque) higher than a second threshold (Th2)?
- (step 6) if yes (step 5 = YES) the score is increased of one point, otherwise go direct to
- (step 7) is the operating percentage of the vehicle with an ideal speed (S3, S4) lower than a third threshold (Th3)?
- (step 8) if yes (step 7 = YES) the score is increased of one point, otherwise go direct to
- (step 9) is the operating percentage of the vehicle with engine in idle and active power takeoff (area B in RPM/Torque) higher than a fourth threshold (Th4)?
- (step 10) if yes (step 9 = YES) the score is increased of one point, otherwise go direct to
- (step 11) is the operating percentage of the vehicle with speed and torque out of ideal conditions (C, F in Speed/Torque) higher than a fifth threshold (Th5)?
- (step 12) if yes (step 11 = YES) the score is increased of one point, otherwise go direct to
- (step 13) is the average speed below a sixth threshold (Th6)?
- (step 14) if yes (step 13 = YES) the score is increased of one point, otherwise go direct to
- (step 15) is the average engine rpm out of said ideal interval (S3, S4)?
- (step 16) if yes (step 15 = YES) the score is increased of one point, otherwise go direct to
- (step 17) is the average driving cycle (D) lower than a seventh threshold Th7?
- (step 18) if yes (step 17 = YES) the score is increased of one point, otherwise go direct to
- (step 19) is the score = 0?
- (step 20) if yes (step 19 = YES) send message "the vehicle fuel consumption is correct";
- (step 21) otherwise compare the average consumption with a corresponding average value of average fuel consumptions (ECE) relating to a group identified by the score obtained,
- (step 22) if a percentage difference is lower than a eighth threshold (Th8), then
- (step 23) if yes (step 23 = YES) send the message "the fuel consumption is correct, the use of the vehicle can be improved";
- (step 24) otherwise send the message "fuel consumption not correct"

13. Device for estimating the vehicle fuel consumption comprising processing and storing means configured to perform all the steps of any one of the claims from 1 to 10.

14. Device for diagnosing a fault of a ground vehicle comprising processing and storing means configured to perform all the steps according to claim 11 or 12.

15. Computer program comprising program code means suitable for performing all the steps of one of the claims from 1 to 12, when such program is run on a computer.

16. Computer-readable means comprising a recorded program, said computer-readable means comprising program code means suitable for performing all the steps according to the one of the claims from 1 to 12, when said program is run on a computer.

17. Ground vehicle comprising a diagnostic device according to claim 14.

## Patentansprüche

1. Verfahren zum Schätzen eines Kraftstoffverbrauchs eines Fahrzeugs, aufweisend die nachstehenden aufeinanderfolgenden Schritte:
- (i) Zuordnen einer ersten Punktzahl zu mindestens einem ersten Betriebsparameter (S, RPM, T, D) des Fahrzeugs und/oder eines entsprechenden Verbrennungsmotors,
- (ii) Zuordnen einer weiteren Punktzahl zu mindestens einem weiteren unterschiedlichen Betriebsparameter (S, RPM, T, D) des Fahrzeugs und/oder eines entsprechenden Verbrennungsmotors,
- Aufsummieren der ersten Punktzahl mit der weiteren Punktzahl, um eine Gesamtpunktzahl zu erhalten,
- Berechnung eines Durchschnitts von Durchschnittskraftstoffverbräuchen (ECE) über eine Gruppe von Fahrzeugen, welche dieselbe Gesamtpunktzahl aufweisen.

2. Verfahren gemäß dem vorhergehenden Anspruch, wobei ein
Durchschnittskraftstoffverbrauch als ein Verhältnis zwischen der Gesamtanzahl an Litern Kraftstoff, welche in das Fahrzeug geladen wurde, und einer jeweiligen Distanz, welche von dem Fahrzeug zurückgelegt wurde, berechnet wird.

3. Verfahren gemäß einem der vorhergehenden Ansprüche, weiter aufweisend einen vorbereiteten Schritt des Speicherns der Gesamtdistanz, welche von dem Fahrzeug zurückgelegt wurde, und des Speicherns der genannten Betriebsparameter, und wobei die Betriebsparameter untereinander unterschiedlich sind und ausgewählt werden aus:
- Durchschnittlicher Drehzahl des Motors (RPM),
- Durchschnittlich angelegtem Drehmoment (T),
- Durchschnittlicher Fahrzeuggeschwindigkeit (S),
- Durchschnittlichem Fahrzyklus (D).

4. Verfahren gemäß einem der vorhergehenden Ansprüche, wobei die Punktzahlzuordnung als eine Funktion der numerischen Werte von jedem der genannten Betriebsparameter durchgeführt wird.

5. Verfahren gemäß Anspruch 4, wobei die Punktzahlzuordnung durch eine Diskretisierung einer jeden Werteskala entsprechend einem der genannten Parameter (S1 - S6, R1 - R6, T1 - T6) und durch eine vorherige Zuordnung einer ansteigenden oder absteigenden Punktzahl bei ansteigend entfernten Werten von einem Referenzintervall entsprechend einem idealen Betriebszustand des Motors / des Fahrzeugs durchgeführt wird.

6. Verfahren gemäß Anspruch 1, weiter aufweisend die folgenden vorbereitenden Schritte:
- Speichern der Distanz, welche vom Fahrzeug zurückgelegt wurde,
- Diskretisierung einer jeden Werteskala, entsprechend einem der Betriebsparameter, in aneinander angrenzende Intervalle,
- Berechnen und Speichern eines Zeitanteilswertes, verknüpft mit jedem der diskreten Intervalle, wobei die Betriebsparameter in solchem jeden Intervall verbleiben, entsprechend dem Betrieb des Fahrzeugs / des Motors, und wobei die Punktzahlzuordnungen als eine Funktion eines Anteilswertes, verknüpft mit einem der Intervalle, durchgeführt werden.

7. Verfahren gemäß Anspruch 6, wobei die Betriebsparameter untereinander unterschiedlich sind und ausgewählt werden aus:
- Durchschnittlicher Drehzahl des Motors,
- Durchschnittlich angelegtem Drehmoment,
- Durchschnittlicher Fahrzeuggeschwindigkeit,
- Durchschnittlichem Fahrzyklus.

8. Verfahren gemäß einem der vorhergehenden Ansprüche, wobei mindestens einer der Betriebsparameter eine Funktion von Drehmomenten von weiteren untereinander unterschiedlichen Parametern ((T, S), (T, RPM)) ist, und wobei die Unterteilung in aneinander angrenzende Intervalle 2D-Bereiche identifiziert (A1 - G1, A - F).

9. Verfahren gemäß einem der vorhergehenden Ansprüche, wobei eine weitere Punktzahl im Zusammenhang mit dem Vorhandensein / der Abwesenheit einer aerodynamischen Erweiterung zugewiesen wird.

10. Verfahren gemäß einem der vorhergehenden Ansprüche, wobei die zurückgelegte Distanz, die geladene Menge an Kraftstoff, die durchschnittliche Motordrehzahl, das durchschnittlich angelegte Drehmoment, die Durchschnittsgeschwindigkeit des Fahrzeugs, der Durchschnittsfahrzyklus Werte sind, die über eine gesamte Lebenszeit des Fahrzeugs oder über eine vom Fahrzeug zurückgelegte Teilstrecke berechnet werden.

11. Verfahren zum Diagnostizieren eines Fehlers eines Bodenfahrzeugs, aufweisend einen Schritt des Speicherns der Durchschnitte von Durchschnittsverbräuchen (ECE) einer jeden Gruppe von Fahrzeugen gemäß einem der vorhergehenden Ansprüche 1 - 10, des Berechnens einer Gesamtpunktzahl des Bodenfahrzeugs gemäß einem der vorhergehenden Ansprüche 1 - 10, und des Vergleichens eines entsprechenden Durchschnittswertes von Durchschnittsverbräuchen (ECE), ermittelt gemäß der Gesamtpunktzahl, mit einem durchschnittlichen Kraftstoffverbrauch, welcher gemäß Anspruch 2 berechnet wurde: Wenn der Vergleich eine Differenz zeigt, die einen vordefinierten Grenzwert überschreitet, wird eine Nachricht über ein mögliches mechanisches Problem des Bodenfahrzeugs verschickt.

12. Diagnoseverfahren gemäß Anspruch 11, aufweisend die nachstehenden aufeinanderfolgenden Schritte:
- (Schritt 1) START
- (Schritt 2) Punktzahl=0
- (Schritt 3) Prüfe: Ist der Betriebsanteil (%) des Fahrzeugs in einem idealen Verbrauchsbereich (C1 in RPM/Drehmoment) niedriger als ein erster Grenzwert (Th1)?
- (Schritt 4) Wenn ja (Schritt 3= ja), wird die Punktzahl um einen Punkt erhöht, andernfalls
- (Schritt 5) prüfe: Ist der Betriebsanteil des Fahrzeugs in einem Bereich hohen Verbrauchs (B1, F1 e G1 in RPM/Drehmoment) höher als ein zweiter Grenzwert (Th2)?
- (Schritt 6) Wenn ja (Schritt 5=ja), wird die Punktzahl um einen Punkt erhöht, andernfalls gehe direkt zu
- (Schritt 7) Ist der Betriebsanteil des Fahrzeugs mit einer Idealgeschwindigkeit (S3, S4) niedriger als ein dritter Grenzwert (Th3)?
- (Schritt 8) Wenn ja (Schritt 7=ja), wird die Punktzahl um einen Punkt erhöht, andernfalls gehe direkt zu
- (Schritt 9) Ist der Betriebsanteil des Fahrzeugs mit Motor im Leerlauf und aktiver Energieentnahme (Bereich B in RPM/Drehmoment) höher als ein vierter Grenzwert (Th4)?
- (Schritt 10) Wenn ja (Schritt 9=ja), wird die Punktzahl um einen Punkt erhöht, andernfalls gehe direkt zu
- (Schritt 11) Ist der Betriebsanteil des Fahrzeugs mit Geschwindigkeit und Drehmoment außerhalb von Idealbedingungen (C, F in Geschwindigkeit/Drehmoment) höher als ein fünfter Grenzwert (Th5)?
- (Schritt 12) Wenn ja (Schritt 11=ja), wird die Punktzahl um einen Punkt erhöht, andernfalls gehe direkt zu
- (Schritt 13) Ist die Durchschnittsgeschwindigkeit unterhalb eines sechsten Grenzwertes (Th6)?
- (Schritt 14) Wenn ja (Schritt 13=ja), wird die Punktzahl um einen Punkt erhöht, andernfalls gehe direkt zu
- (schritt 15) Ist die durchschnittliche Motor-Drehzahl außerhalb des idealen Intervalls (S3, S4)?
- (Schritt 16) Wenn ja (Schritt 15=ja), wird die Punktzahl um einen Punkt erhöht, andernfalls gehe direkt zu
- (Schritt 17) Ist der durchschnittliche Fahrzyklus (D) niedriger als ein siebter Grenzwert (Th7)?
- (Schritt 18) Wenn ja (Schritt 17=ja), wird die Punktzahl um einen Punkt erhöht, andernfalls gehe direkt zu
- (Schritt 19) Ist die Punktzahl=0?
- (schritt 20) Wenn ja (Schritt 19=ja) sende Nachricht "der Kraftstoffverbrauch des Fahrzeugs ist ordnungsgemäß";
- (Schritt 21) andernfalls vergleiche den Durchschnittsverbrauch mit einem entsprechenden Durchschnittswert von Durchschnittsverbräuchen (ECE) in Bezug auf eine Gruppe, identifiziert durch die erhaltene Punktzahl,
- (Schritt 22) Wenn eine prozentuale Differenz kleiner ist als ein achter Grenzwert (Th8), dann
- (Schritt 23) Wenn ja (Schritt 22=ja), sende die Nachricht "der Kraftstoffverbrauch ist ordnungsgemäß, die Benutzung des Fahrzeugs kann verbessert werden",
- (Schritt 24) andernfalls sende die Nachricht "Kraftstoffverbrauch ist nicht ordnungsgemäß".

13. Einrichtung zum Schätzen des Kraftstoffverbrauchs eines Fahrzeugs, aufweisend Verarbeitungs- und Speichermittel, die dazu eingerichtet sind, alle Schritte eines der Ansprüche 1 bis 10 durchzuführen.

14. Einrichtung zum Diagnostizieren eines Fehlers eines Bodenfahrzeugs, aufweisend Verarbeitungs- und Speichermittel, die dazu eingerichtet sind, alle Schritte gemäß Anspruch 11 oder 12 durchzuführen.

15. Computerprogramm aufweisend Programmcodemittel, die dazu geeignet sind, alle Schritte eines der Ansprüche 1 bis 12 auszuführen, wenn das solche Programm auf einem Computer ausgeführt wird.

16. Computerlesbare Mittel, aufweisend ein aufgezeichnetes Programm, wobei die computerlesbaren Mittel Programmcodemittel aufweisen, welche dazu geeignet sind, alle Schritte gemäß dem einem der Ansprüche 1 bis 12 auszuführen, wenn das Programm auf einem Computer ausgeführt wird.

17. Bodenfahrzeug, aufweisend eine Diagnoseeinrichtung gemäß Anspruch 14.

## Revendications

1. Procédé pour estimer la consommation de carburant d'un véhicule, comprenant les étapes subséquentes suivantes :
- (i) attribution d'une première note à au moins un premier paramètre de fonctionnement (S, RPM, T, D) du véhicule et/ou d'un moteur à combustion interne respectif,
- (ii) attribution d'une autre note à au moins un autre paramètre de fonctionnement distinct (S, RPM, T, D) du véhicule et/ou d'un moteur à combustion interne respectif,
- (iii) addition de la première note et de l'autre note afin que soit obtenue une note totale,
- (iv) calcul de la moyenne des consommations moyennes de carburant (ECE) sur un groupe de véhicules ayant la même note totale.

2. Procédé selon la revendication précédente, dans lequel la consommation moyenne de carburant est calculée sous la forme d'un rapport entre le nombre total de litres de carburant à bord du véhicule et la distance respective couverte par le véhicule.

3. Procédé selon l'une des revendications précédentes, comprenant en outre une étape préliminaire de stockage de ladite distance globale couverte par le véhicule, et de stockage desdits paramètres de fonctionnement, dans lequel lesdits paramètres de fonctionnement sont distincts les uns des autres et sont choisis parmi :
- le nombre de tours par minute moyen du moteur (RPM),
- le couple moyen délivré (T),
- la vitesse moyenne du véhicule (S),
- le cycle de conduite moyen (D).

4. Procédé selon l'une des revendications précédentes, dans lequel ladite attribution de note est effectuée en fonction de la valeur numérique de chacun desdits paramètres de fonctionnement.

5. Procédé selon la revendication 4, dans lequel ladite attribution de note est effectuée par une discrétisation de chaque échelle de valeur correspondant à l'un desdits paramètres (S1 - S6, R1 - R6, T1 - T6) et par une attribution préalable d'une note croissante ou décroissante à des valeurs de plus en plus distantes par rapport à un intervalle de référence correspondant à une condition de fonctionnement idéale du moteur/véhicule.

6. Procédé selon la revendication 1, comprenant en outre les étapes préliminaires suivantes :
- stockage de ladite distance couverte par le véhicule,
- discrétisation de chaque échelle de valeur correspondant à l'un desdits paramètres dans des intervalles contigus les uns aux autres,
- calcul et stockage d'une valeur de pourcentage de temps associée à chacun desdits intervalles discrets,
dans lequel lesdits paramètres de fonctionnement restent dans un tel intervalle, en fonction du fonctionnement du véhicule/moteur,
et dans lequel lesdites attributions de note sont effectuées en fonction d'une valeur de pourcentage associée à l'un desdits intervalles.

7. Procédé selon la revendication 6, dans lequel lesdits paramètres de fonctionnement sont distincts les uns des autres et sont choisis parmi :
- le nombre de tours par minute moyen du moteur,
- le couple moyen délivré,
- la vitesse moyenne du véhicule,
- le cycle de conduite moyen.

8. Procédé selon les revendications précédentes, dans lequel au moins l'un desdits paramètres de fonctionnement est fonction des couples d'autres paramètres de fonctionnement distincts les uns des autres ((T,S), (T,RPM)), et dans lequel ladite subdivision en intervalles continus identifie des zones bidimensionnelles (A1 - G1, A - F).

9. Procédé selon l'une des revendications précédentes, dans lequel une autre note est attribuée en relation avec la présence/l'absence d'un accessoire aérodynamique rajouté.

10. Procédé selon l'une des revendications précédentes, dans lequel ladite distance couverte, lesdits litres de carburant à bord, ledit nombre de tours par minute moyen du moteur, ledit couple moyen délivré, ladite vitesse moyenne du véhicule, ledit cycle de conduite moyen sont des valeurs calculées sur toute la vie du véhicule ou sur une distance partielle couverte par le véhicule.

11. Procédé pour diagnostiquer un défaut d'un véhicule terrestre, comprenant une étape de stockage desdites moyennes des consommations moyennes (ECE) de chaque groupe de véhicules selon l'une des revendications 1 à 10, de calcul de la note totale dudit véhicule terrestre selon l'une des revendications 1 à 10, et de comparaison d'une valeur moyenne correspondante de consommations moyennes (ECE), identifiée conformément à ladite note totale, avec une consommation de carburant moyenne calculée selon la revendication 2 : si ladite comparaison indique une différence dépassant un seuil prédéterminé, un message indiquant un problème mécanique possible dudit véhicule terrestre est envoyé.

12. Procédé de diagnostic selon la revendication 11, comprenant les étapes subséquentes suivantes :
- (étape 1) DEBUT
- (étape 2) note = 0
- (étape 3) vérification : le pourcentage de fonctionnement (%) du véhicule dans une zone de consommation idéale (C1 dans RPM/Couple) est-il inférieur à un premier seuil (Th1) ?
- (étape 4) si oui : (étape 3 = OUI), la note est augmentée d'un point, sinon
- (étape 5) vérification : le pourcentage de fonctionnement du véhicule dans une zone de forte consommation (B1, F1 et G1 dans RPM/Couple) est-il supérieur à un deuxième seuil (Th2) ?
- (étape 6) si oui : (étape 5 = OUI), la note est augmentée d'un point, sinon le système va directement à
- (étape 7) le pourcentage de fonctionnement du véhicule avec une vitesse idéale (S3, S4) est-il inférieur à un troisième seuil (Th3) ?
- (étape 8) si oui (étape 7 = OUI), la note est augmentée d'un point, sinon le système va directement à
- (étape 9) le pourcentage de fonctionnement du véhicule avec le moteur en prise de force au ralenti et active (zone B dans RPM/couple) est-il supérieur à un quatrième seuil (Th4) ?
- (étape 10) si oui (étape 9 = OUI), la note est augmentée d'un point, sinon le système va directement à
- (étape 11) le pourcentage de fonctionnement du véhicule avec la vitesse et le couple en-dehors des conditions idéales (C, F dans Vitesse/Couple) est-il supérieur à un cinquième seuil (Th5) ?
- (étape 12) si oui (étape 11 = OUI), la note est augmentée d'un point, sinon le système va directement à
- (étape 13) la vitesse moyenne est-elle inférieure à un sixième seuil (Th6) ?
- (étape 14) si oui (étape 13 = OUI), la note est augmentée d'un point, sinon le système va directement à
- (étape 15) le nombre de tours par minute moyen du moteur est-il en-dehors dudit intervalle idéal (S3, S4) ?
- (étape 16) si oui (étape 15 = OUI), la note est augmentée d'un point, sinon le système va directement à
- (étape 17) le cycle de conduite moyen (D) est-il inférieur à un septième seuil Th7 ?
- (étape 18) si oui (étape 17 = OUI), la note est augmentée d'un point, sinon le système va directement à
- (étape 19) la note est-elle = 0 ?
- (étape 20) si oui (étape 19 = OUI), un message « la consommation de carburant du véhicule est correcte » est envoyé ;
- (étape 21) sinon la consommation moyenne est comparée avec une valeur moyenne correspondante de consommations de carburant moyennes (ECE) concernant un groupe identifié par la note obtenue,
- (étape 22) si une différence de pourcentage est inférieure à un huitième seuil (Th8), alors
- (étape 23) si oui (étape 23 = OUI), un message « la consommation de carburant est correcte, l'utilisation du véhicule peut être améliorée » est envoyé ;
- (étape 24) sinon un message « consommation de carburant incorrecte » est envoyé.

13. Dispositif pour estimer la consommation de carburant d'un véhicule, comprenant le traitement et le stockage de moyens configurés pour exécuter toutes les étapes de l'une quelconque des revendications 1 à 10.

14. Dispositif pour diagnostiquer un défaut d'un véhicule terrestre, comprenant le traitement et le stockage de moyens configurés pour exécuter toutes les étapes selon la revendication 11 ou 12.

15. Programme informatique comprenant des moyens formant code de programme convenant pour l'exécution de toutes les étapes de l'une des revendications 1 à 12, quand ce programme tourne sur un ordinateur.

16. Moyens lisibles par ordinateur comprenant un programme enregistré, lesdits moyens lisibles par ordinateur comprenant des moyens formant code de programme convenant pour l'exécution de toutes les étapes de l'une des revendications 1 à 12, quand ledit programme tourne sur un ordinateur.

17. Véhicule terrestre comprenant un dispositif de diagnostic selon la revendication 14.
